# EUROPÄISCHE PATENTANMELDUNG

(11) **EP 1 923 810 A2**
(43) Veröffentlichungstag der Anmeldung: **21.05.2008**
(21) Anmeldenummer: 07118706.6
(22) Anmeldetag: 17.10.2007
(51) Int. Cl.: G06F 21/00

(54) **Verfahren zur Vergabe von Zugriffsrechten auf Daten**

(30) Priorität: 10.11.2006 AT 18622006
(71) Anmelder: Siemens Aktiengesellschaft Österreich, 1210 Wien (AT)
(72) Erfinder: Eisl, Alexander, 4820, Bad Ischl (AT); Ferstl, Roland, 5020, Salzburg (AT)
(74) Vertreter: Maier, Daniel Oliver

(57) **Zusammenfassung**

Verfahren zur Vergabe von Zugriffsrechten auf Daten (D), die in zumindest einem Datenspeicher (1) gespeichert sind, und auf Anfrage eines mit dem Datenspeicher (1) über ein Computernetzwerk verbundenen Benutzers (2) in Abhängigkeit seines Zugriffsrechts ausgelesen und gegebenenfalls verändert werden können. Erfindungsgemäß ist vorgesehen, dass die Daten (D) zumindest eine Datenteilmenge (D. i, i=1, 2...n) aufweisen, denen jeweils ein Datenverantwortlicher (V.i, i=1,2...n) zugeordnet ist, und die Erteilung oder Ablehnung des Zugriffsrechtes bei Anfrage nach Daten (D) aus einer Datenteilmenge (D.i) durch den jeweils zugeordneten Datenverantwortlichen (V.i) erfolgt. Die Anfrage eines Benutzers (2) wird dabei über eine Identitäts- und Zugriffsverwaltungseinheit (3) ausgeführt, in der für den jeweiligen Benutzer (2) seine ihm zugeordneten Zugriffsrechte gespeichert sind, wobei die Identitäts- und Zugriffsverwaltungseinheit (3) bei Anfrage nach Daten (D) aus einer der Datenteilmengen (D.i) eine elektronische Benachrichtigung an den der betreffenden Datenteilmenge (D.i) zugeordneten Datenverantwortlichen (V.i) sendet.

## Beschreibung

Die Erfindung betrifft ein Verfahren zur Vergabe von Zugriffsrechten auf Daten, die in zumindest einem Datenspeicher gespeichert sind, und auf Anfrage eines mit dem Datenspeicher über ein Computernetzwerk verbundenen Benutzers in Abhängigkeit seines Zugriffsrechts ausgelesen und gegebenenfalls verändert werden können, gemäß dem Oberbegriff von Anspruch 1.

Zur Vergabe von Zugriffsrechten ist in herkömmlicher Weise ein Systemverantwortlicher zuständig, der auch als Administrator bezeichnet wird. Der Administrator vergibt hierbei für bestimmte Daten Zugriffsrechte, um auf diese Weise etwa nur den Mitgliedern einer Projektgruppe Zugriff auf projektrelevante Daten zu ermöglichen, oder den Angehörigen einer bestimmten Firmenabteilung Zugriff auf Teile des Firmendatenspeichers. Die Zugriffsrechte können sich dabei auf eine bestimmte Person, oder auch auf einen bestimmten Computer beziehen. Eine Person kann dabei auch auf unterschiedliche Bereiche eines Datenspeichers unterschiedliche Zugriffsrechte besitzen, etwa wenn sie an mehreren Projekten arbeitet. Daher spricht man in diesen Fällen auch von "rollenspezifischen" Zugriffsrechten. Im Folgenden werden die unterschiedlichen Möglichkeiten, also physische Person, Computer oder Rolle, jedoch stets als "Benutzer" bezeichnet.

Die Zugriffsrechte sind in der Regel Änderungen unterworfen, die vom Administrator zu verwalten sind, zumeist mithilfe so genannter "Administratortools", also entsprechende Softwareprogramme, die eine Neuverteilung bzw. Änderung von Zugriffsrechten erlauben. In der Praxis werden auf konkrete Anfrage etwa eines Benutzers oder eines Projektverantwortlichen Zugriffsrechte auf Datenteilmengen für bestimmte Benutzer je nach betrieblicher Notwendigkeit vom Administrator festgelegt. Der Administrator nimmt die entsprechenden Systemeinstellungen vor, und meldet daraufhin der anfragenden Person die vollzogenen Änderungen.

Eine solche Vorgangsweise führt aber dazu, dass der Administrator mitunter mit einer Fülle von Anfragen nach Zugriffsrechten konfrontiert ist, und deren Verwaltung Zeit und Mühe erfordert. Insbesondere in größeren Betrieben kann es bei diesem Zusammenspiel zwischen Benutzer, systembedingtem Zuständigkeitsbereich (z.B. Administrator) und fachlichem Zuständigkeitsbereich (z.B. Projektverantwortlicher) zu einem entsprechenden Koordinationsaufwand kommen. Ein technisch bedeutsames Problem besteht allerdings auch darin, dass der Administrator zwar die Verwaltung der Zugriffsrechte auf Daten vornimmt, mit den Daten selbst aber nicht vertraut ist. Das Wissen über die Art und die Bestimmung von Daten liegt vielmehr bei jenen, die Zugriffsrechte für Benutzer anfordern, also Verantwortliche für Unternehmensteile oder Projektverantwortliche, die im Folgenden auch als "Datenverantwortliche" bezeichnet werden. Der Datenverantwortliche ist daher auch viel besser damit vertraut, wer auf welche Daten über welchen Zeitraum zugreifen können muss, und welche Datenbereiche für bestimmte Personen geheim zu bleiben haben. Der Administrator verfügt hingegen nicht über dieses Detailwissen, was in der Praxis in einer erhöhten Fehleranfälligkeit resultiert.

Aus der Schrift WO 1996/17284 A2 ist ein Verfahren bekannt, welches zur Verbesserung betreffend die Zugriffsrechte in oder auf eine Datenbank mit einer Vielzahl an Benutzern dient. Dabei sind eine zentrale Administratorrolle sowie mehrere untergeordnete - so genannte Client-Administratorrollen vorgesehen, welche hierarchisch organisiert die jeweiligen Rechte für die jeweiligen Benutzer vergeben. Allerdings weist das in der Schrift WO 1996/17284 A2) beschriebene Verfahren den Nachteil auf, dass bei Abfrage von Daten durch eine Benutzer keine Benachrichtigung an jenen Datenverantwortlichen gesendet wird, welche für die abgefragten Daten zuständig ist, wodurch einerseits der Aufwand für die Vergabe der Zugriffsrechte und anderseits aber auch die Fehleranfälligkeit steigt.

Die Schrift EP 1 122 629 A2 beschreibt allgemein ein Verfahren für eine Zugangskontrolle zu einer Speichereinrichtung, bei dem mehrere Gruppen, welche Zugang zur Speichereinrichtung haben, sowie mehrere Pools von Speichereinrichtungen definiert werden und dann für die jeweiligen Gruppen Zugriffsrechte auf die jeweiligen Pools von Speichereinrichtung bestimmt werden. Dabei wird aber auf unterschiedliche Rollen wie z.B. Administrator, Datenverantwortlicher, Benutzer, etc. nicht eingegangen.

Die Schriften DE 198 24 787 A1 und US 6,978,381 B1 offenbaren ebenfalls weitere Verfahren zur Vergabe von Zugriffsrechten auf Dateien und damit auf Daten. In der Schrift DE 198 24 787 A1 wird ein Verfahren zum abgesicherten Zugriff auf Daten in einem Netzwerk offenbart. Die Schrift US 6,978,381 B1 beschreibt ebenfalls ein Verfahren zur Kontrolle des Zugriffs von Benutzern auf eine Anzahl von Datenbanken, wobei die Zugriffsrechte anhand von durch einen Administrator verwalteten Profilen vergeben werden. In beiden Schriften werden aber unterschiedliche Rollen während der Vergabe von Zugriffsrechten wie z.B. Administrator, Datenverantwortlicher, Benutzer, etc. nicht unterschieden, wodurch wieder die Fehleranfälligkeit steigen kann.

Es ist daher das Ziel der Erfindung, die Vergabe von Zugriffsrechten auf Daten zu optimieren, um einerseits die Arbeitsabläufe zwischen Benutzer, Administrator und den Datenverantwortlichen effizienter und damit kostengünstiger zu gestalten, und andererseits die Fehleranfälligkeit der Allokation von Zugriffsrechten auf Daten zu reduzieren. Diese Ziele werden durch die Merkmale von Anspruch 1 erreicht.

Anspruch 1 bezieht sich auf ein Verfahren zur Vergabe von Zugriffsrechten auf Daten, die in zumindest einem Datenspeicher gespeichert sind, und auf Anfrage eines mit dem Datenspeicher über ein Computernetzwerk verbundenen Benutzers in Abhängigkeit seines Zugriffsrechts ausgelesen und gegebenenfalls verändert werden können. Erfindungsgemäß ist hierbei vorgesehen, dass die Daten zumindest eine Datenteilmenge aufweisen, denen jeweils ein Datenverantwortlicher zugeordnet ist, und die Erteilung oder Ablehnung des Zugriffsrechtes bei Anfrage nach Daten aus einer Datenteilmenge durch den jeweils zugeordneten Datenverantwortlichen erfolgt. Die Anfrage eines Benutzers nach Daten erfolgt dabei über eine Identitäts- und Zugriffsverwaltungseinheit, in der für den jeweiligen Benutzer seine ihm zugeordneten Zugriffsrechte gespeichert sind, wobei die Identitäts- und Zugriffsverwaltungseinheit bei Anfrage nach Daten aus einer der Datenteilmengen eine elektronische Benachrichtigung an den der betreffenden Datenteilmenge zugeordneten Datenverantwortlichen sendet.

Der Datenverantwortliche ist mit der Art der Daten und ihrer Zuordnung zu bestimmten Benutzern am besten vertraut und weiß daher über deren Bestimmung und eventuelle Geheimhaltungsbedingungen am besten Bescheid. Das erhöht die Datensicherheit und die zielsichere Zuordnung von Zugriffsrechten. Gleichzeitig wird aber auch der Administrator entlastet, dessen Aufgaben auf die allgemeine Systembetreuung, auf die Vergabe von Zugriffsrechten auf Daten außerhalb der den Datenverantwortlichen zugeordneten Datenteilmengen und die Betreuung der Datenverantwortlichen selbst fokussiert werden können. Es wäre aber auch denkbar, im Rahmen der Erfindung hinsichtlich der Vergabe von Zugriffsrechten auf einen physischen Administrator zu verzichten, und die Vergabe von sonstigen Zugriffsrechten automatisiert zu administrieren.

Durch das erfindungsgemäße Verfahren kann auch auf vorteilhafte Weise eine Benachrichtigung des betreffenden Datenverantwortlichen etwa in allen Fällen einer Datenanfrage erfolgen, oder nur in jenen Fällen, wo eine Anfrage Daten betrifft, für die der betreffende Benutzer noch keine Zugriffsrechte verfügt. Eine Möglichkeit der Benachrichtigung besteht etwa in Form einer e-mail, die von der Identitäts-und Zugriffsverwaltungseinheit automatisiert erstellt und versendet wird, und die dem entsprechenden Datenverantwortlichen etwa Informationen über den betreffenden Benutzer, seine zugeordneten Aufgaben, seine aktuellen Zugriffsrechte und seine Datenanfrage bereit stellt.

In weiterer Folge kann durch den betreffenden Datenverantwortlichen ein Zugriffsrecht erteilt oder verweigert werden, wobei etwa gemäß Anspruch 2 vorgesehen sein kann, dass die Erteilung oder Ablehnung des Zugriffsrechtes durch den Datenverantwortlichen durch Veränderung der für den jeweiligen Benutzer gespeicherten Zugriffsrechte in der Identitäts- und Zugriffsverwaltungseinheit erfolgt. Dadurch kann ein Verfahrensablauf sichergestellt werden, bei der etwa bei folgenden Anfragen desselben Benutzers keine Benachrichtigung des Verantwortlichen mehr erfolgt. Sein Zugriffsrecht ist vielmehr permanent erteilt. Alternativ kann auch vorgesehen sein, dass das erteilte Zugriffsrecht nur temporär vergeben wird, also nach Ablauf einer vorbestimmten Zeit wieder abläuft. Ein solcher Vorgang kann dabei durchaus auch automatisiert erfolgen, sodass nach Ablauf einer vorbestimmten Zeitdauer die Zugriffsrechte des betreffenden Benutzers wieder auf den Ausgangsstatus zurückgesetzt werden.

Des Weiteren kann gemäß Anspruch 3 nach Erteilung oder Ablehnung des Zugriffsrechtes durch den Datenverantwortlichen durch Veränderung der für den jeweiligen Benutzer gespeicherten Zugriffsrechte in der Identitäts- und Zugriffsverwaltungseinheit eine elektronische Benachrichtigung an den Benutzer erfolgen. Das kann wiederum per e-mail erfolgen, über die der Benutzer somit über erteilte oder entzogene Zugriffsrechte informiert wird.

Zur technischen Realisierung des erfindungsgemäßen Verfahrens kann gemäß Anspruch 4 vorgesehen sein, dass die Datenanfragen eines Benutzers sowie die Vergabe und der Ablehnung von Zugriffsrechten durch den Datenverantwortlichen über einen Web-Server erfolgen. Somit kann die Identitäts- und Zugriffsverwaltungseinheit über eine für den Benutzer und die Datenverantwortlichen gemeinsame Plattform erfolgen, auf die jeweils über ein Kommunikationsnetzwerk zugegriffen werden kann. Der Web-Server wird dabei zweckmäßiger Weise mit einem Mail-Server für den Austausch elektronischer Nachrichten verbunden sein, um etwa die elektronische Erstellung und Versendung von e-mails, sowie die Verwaltung gesendeter und empfangener e-mails zu ermöglichen.

Die Erfindung wird im Folgenden anhand bevorzugter Ausführungsformen durch die beiliegenden Zeichnungen näher erläutert. Es zeigen hierbei die
Fig. 1 eine schematische Darstellung eines ersten Verfahrensschrittes, bei dem der Benutzer eine Anfrage nach Daten an die Identitäts- und Zugriffsverwaltungseinheit stellt,
Fig. 2 eine schematische Darstellung eines zweiten Verfahrensschrittes, bei dem die Identitäts- und Zugriffsverwaltungseinheit eine Benachrichtigung an den zuständigen Datenverantwortlichen sendet,
Fig. 3 eine schematische Darstellung eines dritten Verfahrensschrittes, bei dem der Datenverantwortliche entsprechende Änderungen der Zugriffsrechte für den betreffenden Benutzer in der Identitäts- und Zugriffsverwaltungseinheit vornimmt,
Fig. 4 eine schematische Darstellung eines vierten Verfahrensschrittes, bei dem der Benutzer eine Benachrichtigung von der Identitäts- und Zugriffsverwaltungseinheit über die veränderten Zugriffsrechte erhält, und die
Fig. 5 eine schematische Darstellung eines fünften Verfahrensschrittes, bei dem der Benutzer auf die nun freigegebenen Daten zugreifen kann.

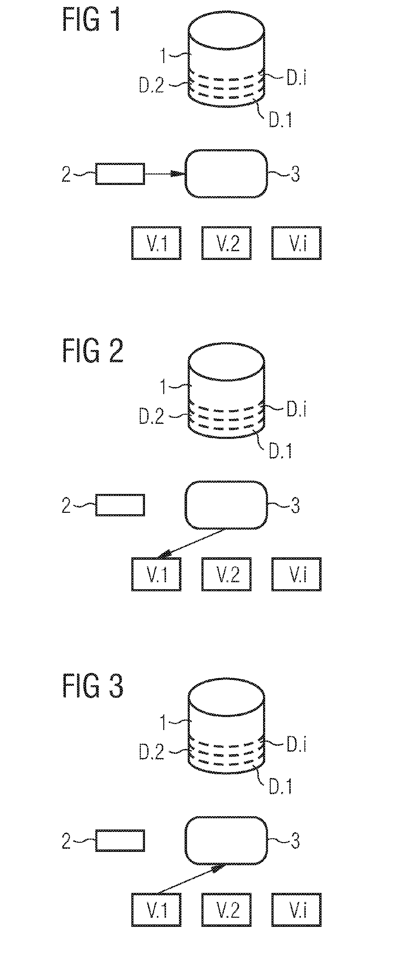

In den Fig. 1-5 ist eine Ausführungsform des erfindungsgemäßen Verfahrens als Web-Applikation dargestellt. Zentrales Element ist hierbei eine Identitäts- und Zugriffsverwaltungseinheit 3, auf die von einem Benutzer 2 über einen Web-Server zugegriffen werden kann. Die Identitäts- und Zugriffsverwaltungseinheit 3 enthält die Benutzerprofile, also Informationen über die beteiligten Benutzer 2 und den ihnen zugewiesenen Rollen in Gruppen von Benutzern 2, um anfragende Benutzer 2 zu identifizieren. Des Weiteren enthält die Identitäts- und Zugriffsverwaltungseinheit 3 Verwaltungsfunktionen ("Folder-Permission Management") für Zugriffsrechte der Benutzer 2, die Listen von Dateien des Datenspeichers 1, in denen die Daten D organisiert sind, bereithalten, sowie aktuelle Zugriffsrechte der Benutzer 2. Diese Verwaltungsfunktionen werden ferner auch Konfigurationsdateien enthalten, in denen etwa vorbestimmte Ablaufzeiten von Zugriffsrechten, die Bedingungen für das Versenden von Benachrichtigungen und weitere Systemeinstellungen festgelegt sind. Die Identitäts-und Zugriffsverwaltungseinheit 3 wird hierzu mit einem Mail-Server für das Versenden elektronischer Nachrichten verbunden sein. Des Weiteren können die Verwaltungsfunktionen auch automatisierte Funktionen für das Erstellen von Berichten über Datenanfragen sowie Veränderungen von Zugriffsrechten vorsehen. Die Identitäts- und Zugriffsverwaltungseinheit 3 kann ferner auch "User Directories" beinhalten, also Verzeichnisse über den Zugriff der Benutzer 2 auf die Identitäts- und Zugriffsverwaltungseinheit 3.

Die Identitäts- und Zugriffsverwaltungseinheit 3 wird aber auch spezielle Funktionen für die Datenverantwortlichen V.i (i=1,2,...n) bereit halten, etwa Verzeichnisse über die Datenteilmengen D.i (i=1,2,...n), für die der betreffende Datenverantwortliche V.i über Vergaberechte von Zugriffsrechten verfügt, sowie Funktionen für das Einsehen vergebener Zugriffsrechte und deren Veränderung ("Group & Folder Management"). Dabei ist es vorteilhaft, wenn das erfindungsgemäße Verfahren in seiner technischen Verwirklichung möglichst bedienerfreundlich ausgeführt ist, also über eine leicht bedienbare Oberfläche etwa die entsprechenden Änderungen von Zugriffsrechten veranlasst werden können, und die hierfür notwendigen SystemEinstellungen z.B. im LDAP (Lightweight Directory Access Protocol) durch die Web-Applikation selbst vorgenommen werden.

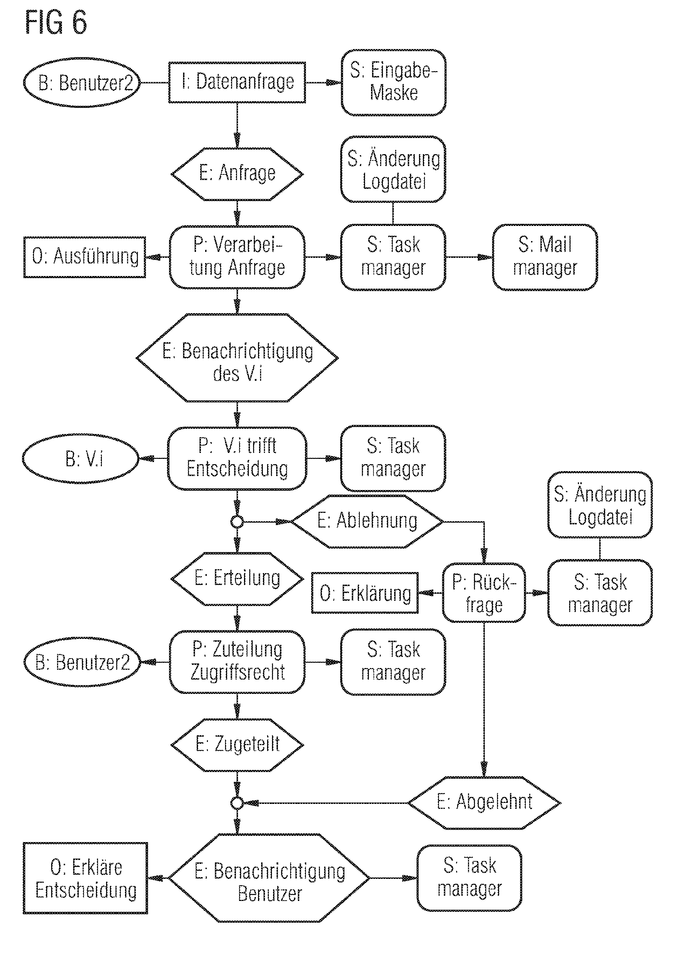

Der Ablauf des erfindungsgemäßen Verfahrens kann nun wie folgt erfolgen, wobei auch auf die Fig. 6 verwiesen wird, die in Anlehnung an eine EPK-Syntax ("Ereignisgesteuerte Prozesskette) gestaltet wurde. Hierbei bezeichnen die Felder mit dem Buchstaben "B" organisatorische Einheiten, also im vorliegenden Fall etwa die Benutzer 2, oder die Datenverantwortlichen V.i, die Felder mit dem Buchstaben "E" Ereignisse (Auslöser von Prozessen und deren Ergebnis), die Felder mit dem Buchstaben "P" Prozesse (Aktion nach einem auslösenden Ereignis), die Felder mit dem Buchstaben "S" apparative Systemteile, das Feld mit dem Buchstaben "I" das Startereignis für die dargestellte Prozesskette, und die Felder mit dem Buchstaben "O" ein Daten- oder Materialobjekt. Kreisrunde Felder ohne Textinhalt stellen logische Verknüpfungen dar, in der Fig. 6 ausschließlich "ODER"-Verknüpfungen.

Ein Benutzer 2 formuliert zunächst eine Anfrage nach Daten D des Datenspeichers 1, etwa unter Zuhilfenahme einer Eingabemaske auf einem Web-Server, die in weiterer Folge an die Identitäts- und Zugriffsverwaltungseinheit 3 gerichtet wird (Fig. 1). Mithilfe der oben beschriebenen Verwaltungsfunktionen beginnt die Identitäts- und Zugriffsverwaltungseinheit 3 mit der Verarbeitung der Anfrage. Insbesondere identifiziert sie den Benutzer 2 und überprüft seine Zugriffsrechte zu den angefragten Daten D, die z.B. der Datenteilmenge D.1 zugeordnet sind. Dabei kann in herkömmlicher Weise ein Task Manager eingesetzt werden, der die laufenden Programme bzw. Prozesse überwacht und mithilfe einer Logdatei protokolliert. Der Task Manager kann diese Funktionen dabei auch in Zusammenwirken mit einem herkömmlichen Mail Manager ausüben.

Im Falle einer fehlenden Zugriffsberechtigung ermittelt die Identitäts- und Zugriffsverwaltungseinheit 3 den für die Datenteilmenge D.1 zuständigen Datenverantwortlichen V.1, und veranlasst eine automatisierte Erstellung einer elektronischen Benachrichtigung an den Datenverantwortlichen V.1, die etwa Informationen über den anfragenden Benutzer 2 und den ihnen zugewiesenen Rollen in Gruppen von Benutzern 2, sowie die angefragten Daten D enthält (Fig. 2). Der Datenverantwortliche V.1 entscheidet nun über die Vergabe entsprechender Zugriffsrechte auf die angefragten Daten D, und nimmt gegebenenfalls entsprechende Änderungen der Zugriffsrechte für den betreffenden Benutzer 2 in der Identitäts- und Zugriffsverwaltungseinheit 3 vor (Fig. 3).

Für den Fall einer Ablehnung von Zugriffsrechten kann eine Rückfrage-Funktion vorgesehen sein, mit der die Identitäts-und Zugriffsverwaltungseinheit 3 zur Bestätigung und eventuell Begründung der Ablehnung auffordert. Ein Task Manager kann wiederum diesen Ablauf überwachen und entsprechend protokollieren. Auch die Erteilung von Zugriffsrechten durch den Datenverantwortlichen V.1 und deren Zuteilung durch die Identitäts- und Zugriffsverwaltungseinheit 3 wird zweckmäßiger Weise von einem Task Manager überwacht und protokolliert.

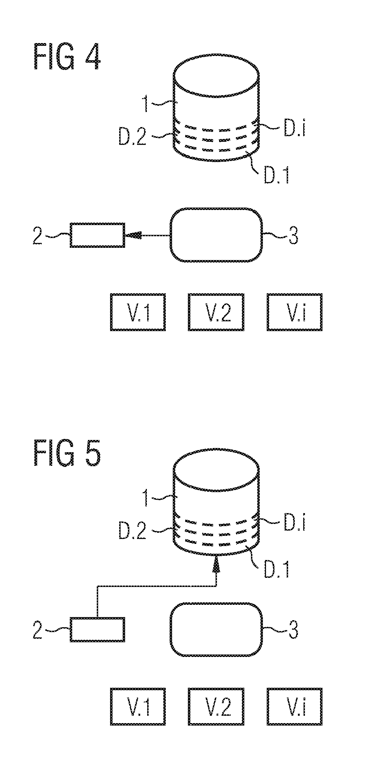

Die Identitäts- und Zugriffsverwaltungseinheit 3 stellt die Änderung von Zugriffsrechten für den Benutzer 2 fest, aktualisiert die entsprechenden Einstellungen im Folder-Permission Management und dem User Directory, und veranlasst in weiterer Folge die Erstellung einer elektronischen Benachrichtigung an den Benutzer 2, in der er über seine aktualisierten Zugriffsrechte informiert wird. Die Benachrichtigung des Benutzers 2 mitsamt entsprechender Begründung wird sowohl bei Erteilung eines Zugriffsrechtes, als auch bei Ablehnung eines Zugriffsrechtes zweckmäßig sein. Im Falle einer Erteilung des Zugriffsrechtes ist der Benutzer 2 nun autorisiert, auf die angefragten Daten D zuzugreifen (Fig. 5), wobei die Daten D des Datenspeichers 1 zweckmäßiger Weise auf einem File-Server abgelegt sein werden. Seine Autorisierung kann dabei permanent erteilt worden sein, oder auch nur temporär, also nach Ablauf einer vorbestimmten Zeit wieder ablaufen.

Mithilfe des erfindungsgemäßen Verfahrens wird somit erreicht, dass die Vergabe von Zugriffsrechten auf Daten D optimiert wird, wodurch einerseits die Arbeitsabläufe zwischen Benutzer 2, Administrator und den Datenverantwortlichen V.i effizienter und damit kostengünstiger gestaltet werden, und andererseits die Fehleranfälligkeit der Allokation von Zugriffsrechten auf Daten D reduziert wird.

## Patentansprüche

1. Verfahren zur Vergabe von Zugriffsrechten auf Daten (D), die in zumindest einem Datenspeicher (1) gespeichert sind, und auf Anfrage eines mit dem Datenspeicher (1) über ein Computernetzwerk verbundenen Benutzers (2) in Abhängigkeit seines Zugriffsrechts ausgelesen und gegebenenfalls verändert werden können, wobei die Daten (D) zumindest eine Datenteilmenge (D.i, i=1,2...n) aufweisen, denen jeweils ein Datenverantwortlicher (V.i, i=1,2...n) zugeordnet ist, und die Erteilung oder die Ablehnung des Zugriffsrechtes bei Anfrage nach Daten (D) aus einer Datenteilmenge (D.i) durch den jeweils zugeordneten Datenverantwortlichen (V.i) erfolgt, **dadurch gekennzeichnet, dass** die Anfrage eines Benutzers (2) nach Daten (D) über eine Identitäts- und Zugriffsverwaltungseinheit (3) erfolgt, in der für den jeweiligen Benutzer (2) seine ihm zugeordneten Zugriffsrechte gespeichert sind, wobei die Identitäts-und Zugriffsverwaltungseinheit (3) bei Anfrage nach Daten (D) aus einer der Datenteilmengen (D.i) eine elektronische Benachrichtigung an den der betreffenden Datenteilmenge (D.i) zugeordneten Datenverantwortlichen (V.i) sendet.

2. Verfahren nach Anspruch 1, **dadurch gekennzeichnet, dass** die Erteilung oder die Ablehnung des Zugriffsrechtes durch den Datenverantwortlichen (V.i) durch Veränderung der für den jeweiligen Benutzer (2) gespeicherten Zugriffsrechte in der Identitäts- und Zugriffsverwaltungseinheit (3) erfolgt.

3. Verfahren nach Anspruch 2, **dadurch gekennzeichnet, dass** nach Erteilung oder Ablehnung des Zugriffsrechtes durch den Datenverantwortlichen (V.i) durch Veränderung der für den jeweiligen Benutzer (2) gespeicherten Zugriffsrechte in der Identitäts- und Zugriffsverwaltungseinheit (3) eine elektronische Benachrichtigung an den Benutzer (2) erfolgt.

4. Verfahren nach einem der Ansprüche 2 bis 3, **dadurch gekennzeichnet, dass** die Datenanfragen eines Benutzers (2) sowie die Vergabe und Ablehnung von Zugriffsrechten durch den Datenverantwortlichen (V.i) über einen Web-Server erfolgen.
